# EUROPEAN PATENT APPLICATION

(11) **EP 4 043 135 A1**
(43) Date of publication of application: **17.08.2022**
(21) Application number: 20871898.1
(22) Date of filing: 28.09.2020
(51) Int. Cl.: B23H 1/06, B23H 7/08

(54) **ELECTRODE WIRE FOR ELECTRICAL DISCHARGE MACHINING**

(30) Priority: 30.09.2019 KR 20190120972
(71) Applicant: EDM Today Beta R&D Center Inc., Pyeongtaek-si, Gyeonggi-do 17817 (KR)
(72) Inventor: PARK, Chul Min, Osan-si, Gyeonggi-do 18132 (KR)
(74) Representative: Michalski Hüttermann & Partner Patentanwälte mbB
(86) International application number: PCT/KR2020/013251
(87) International publication number: WO 2021/066471

(57) **Abstract**

The present invention relates to an electrode wire for electrical discharge machining, the electrode wire including: a core made of first metal; and an alloy layer which is formed at an outer circumference of the core due to inter-dispersion of the core and second metal with which an outer surface of the core is plated. The alloy layer includes a portion formed by α phase + β' phase and β' phase grains. The alloy layer has cracks formed at a surface thereof. According to such a configuration described above, there can be provided an electrode wire for electrical discharge machining which has an even surface, improves a machining speed and the surface roughness of a workpiece, and minimizes generation of fine debris of the electrode wire.

## Description

### [Technical Field]

The present invention relates to an electrode wire for electrical discharge machining, and more specifically, to an electrode wire for electrical discharge machining which can improve efficiency of discharge and a machining speed and improve machining accuracy and surface roughness by forming β' phase grains having cracks on a surface of the electrode wire and thus minimizing generation of fine debris of the electrode wire.

### [Background Art]

The wire electrical discharge machining has been employed in the related art as a method for causing discharge by using a machining liquid such as water as a medium between a workpiece and an electrode wire for wire electrical discharge machining and for cutting the workpiece into a desired shape by relatively moving the electrode wire and the workpiece from each other.

In the electrical discharge machining method, various types of electrode wires such as a high-strength electrode wire containing molybdenum, tungsten, or the like and a brass electrode wire, as well as a pure copper electrode wire, are used as an electrode wire.

Regarding the electrode wire, USP 4,686,153 discloses a prior technology for coating a copper clad steel wire having a diameter of 0.49 mm with a zinc layer, then elongating the copper clad steel wire coated with the zinc layer to have a diameter of 0.2 mm, and heating this elongated wire at 300°C for one hour in a non-oxidizing nitrogen gas atmosphere to disperse copper in the zinc layer such that the zinc layer is converted into a copper-zinc alloy layer. A copper-zinc alloy of the coper-zinc alloy layer has a zinc concentration of about 45%, and the zinc concentration gradually decreases from a surface of the layer. An average zinc concentration of the copper-zinc alloy layer is 50% or lower and 10% or higher. A β phase copper-zinc alloy has a zinc concentration of 40% to 50%, and a surface layer includes a β phase copper-zinc alloy layer at an outer surface thereof. However, the technology requires improving a machining speed without degrading accuracy of a surface which is obtained in a cutting process.

In this respect, the inventor of the present invention proposed a porous electrode wire for electrical discharge machining disclosed in Korean Patent Registration No. 10-518727 and a method for manufacturing a porous electrode wire for electrical discharge machining disclosed in Korean Patent Registration No. 10-518731.

These technologies further improve a cooling effect of the electrode wire such that a machining speed is more significantly improved than that of the electrode wire proposed in USP 4,686,153, by forming an alloy plating layer formed by pieces of γ phase grains at an outer circumference of the core metal due to inter-dispersion of the core metal and a galvanizing layer and forming cracks at a surface of the electrode wire.

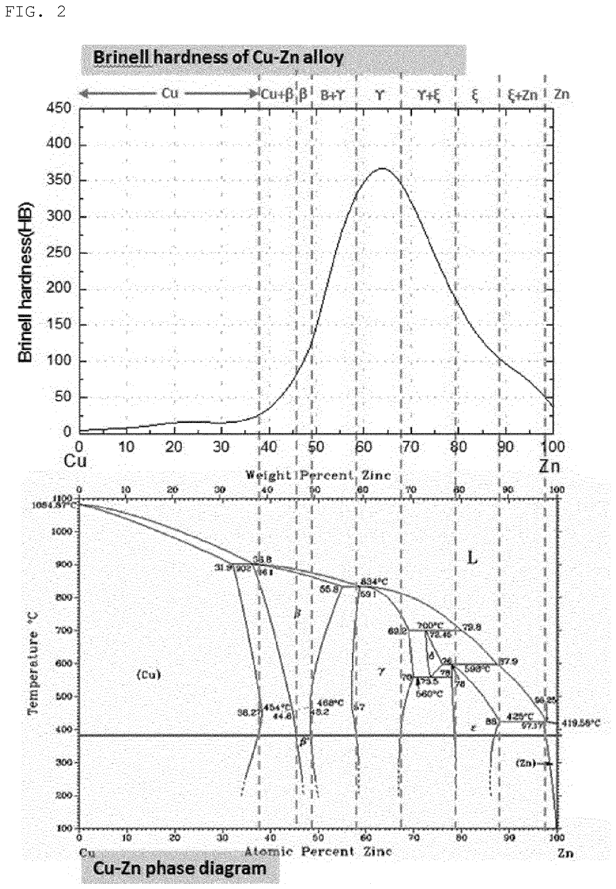

Incidentally, a study on a γ phase alloy plating layer formed on the brass core with respect to these technologies enables the inventor of the present invention to confirm a comparison graph of hardness and a phase diagram, the hardness being the Brinell hardness of "HYPER Zn" containing 50% by weight or more of Zn among Cu-Zn binary alloys and the phase diagram being obtained depending on a change in copper (Cu)-zinc (Zn) binary alloy phase, as illustrated in FIG. 2, with the consultation from Korea Institute of Materials Science.

FIG. 2 described above shows that a γ phase alloy plating layer has very high Brinell hardness of 350HB or higher and very high brittleness as illustrated in FIG. 2. The γ phase alloy plating layer having such properties easily cracks and generates crack fragments without withstanding drawing pressure in a drawing process, and a large amount of fine debris is attached to the inside and outside of a crack. Consequently, the crack fragments and the large amount of fine debris become an impediment to improvement of a machining speed by causing secondary discharge due to the crack fragments and the fine debris when the electrical discharge machining is performed.

In this respect, the inventor again proposed a porous electrode wire for electrical discharge machining and a method for manufacturing the same disclosed in Korean Patent Registration No. 10-1284495.

Compared to the electrode wire proposed in Korean Patent Registration No. 10-518727 or 10-518731, the technology provided above has the following effects. Grains (mainly forming an α phase and a β phase) extending through the cracks formed at a second alloy layer are made of a material, of which a core is made, in a process of forming a fine line at a surface of the electrode wire for electrical discharge machining, and thereby fine debris generated due to cracking or crushing of the second alloy layer in a discharge process can be reduced by covering the second alloy layer (mainly formed by a γ phase) having cracks with relatively soft grains, and a speed of the electrical discharge machining and the surface roughness of a workpiece are more improved.

However, the above-described technology can improve the machining speed of the workpiece and the surface roughness of the workpiece to some extent; however, there is a limit to minimization of the fine debris of the electrode wire, the fine debris being generated when a crack (mainly second alloy layer) portion is broken.

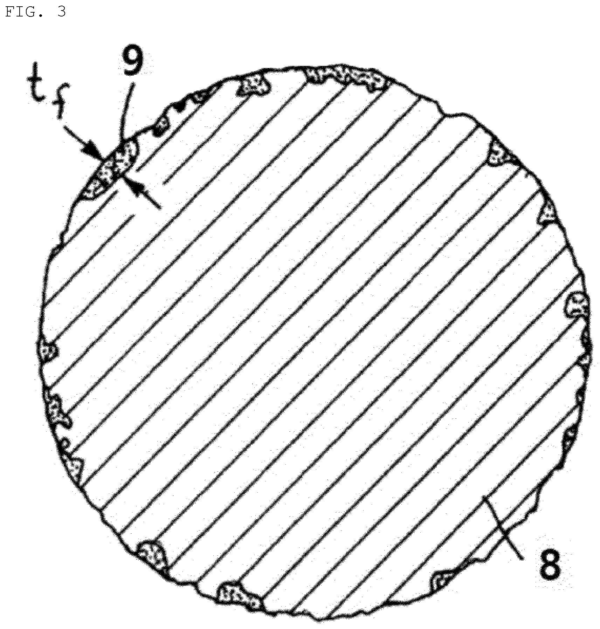

In addition, an electrode wire for use in electrical discharge machining and a process for preparing same disclosed in USP 5,945,010 is a patent in which a concept of crack is introduced to a wire electrode wire, similar to the patents described above. In order to prepare the wire electrode wire, first, a core is coated with zinc having a gasification temperature lower than that of the core, through electroplating, and dispersion heat treatment process is performed for one to four hours in a temperature range of 150°C to 400°C until a galvanizing layer becomes a γ phase alloy layer in order to generate a sufficient dispersion reaction between the core and the galvanizing layer coated through the electroplating, thereby manufacturing an electrode wire having pieces of γ phase grains (9) formed at the surface as illustrated in FIG.3. Undescribed Reference sign tf represents a maximum thickness of γ phase brass alloy coating.

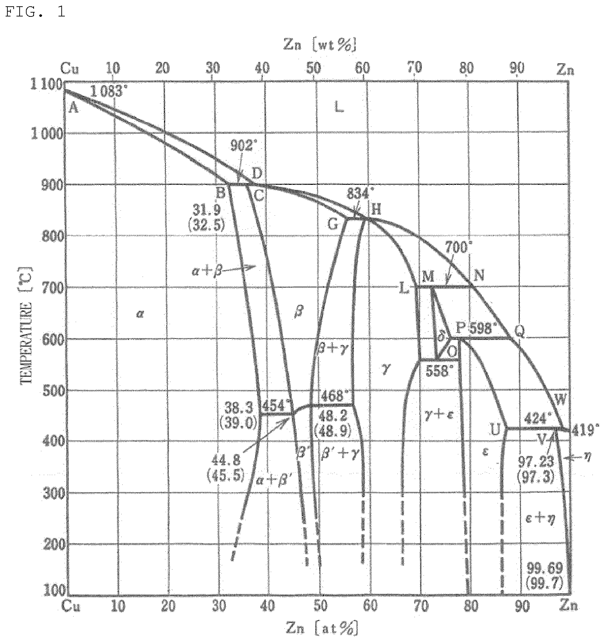

However, although the above-described technology also has an advantage in that the machining speed is improved by forming the electrode wire having the alloy plating layer formed by γ phase grain pieces (9) which are an alloy of zinc and copper at a surface of the electrode wire, since the alloy plating layer having cracks at a brass core (8) is formed mainly by the γ phase as illustrated in FIGS. 1 and 2, the alloy plating layer easily cracks to generate a large amount of crack fragments and fine debris without withstanding the drawing pressure in a drawing process, and thus there is a limit to improvement of the machining speed and the surface roughness.

### [Summary of Invention]

### [Technical Problem]

The present invention is made to solve such problems described above, and an object thereof is to provide an electrode wire for electrical discharge machining which enables machining accuracy and surface roughness to be improved while enabling efficiency of discharge and a machining speed to be also improved by minimizing generation of fine debris of the electrode wire.

Another object of the present invention is to provide an electrode wire for electrical discharge machining which exhibits a maximum cooling effect and does not generate fine debris since the electrode wire mainly has β' phase grains, cracks, and pinholes at an outermost layer thereof and fine voids formed by γ phase + ε phase and a cave-shaped ε phase caved in deeper than cracks from a surface toward a core of the electrode wire so as for high-pressure cooling water to infiltrate to the core.

Still another object of the present invention is to provide an electrode wire for electrical discharge machining which has β' phase grains and cracks at a surface of the electrode wire which are more even than γ phase cracks, compared to an electrode wire in the related art which has γ phase grains at a surface of the electrode wire.

Still another object of the present invention is to provide an electrode wire for electrical discharge machining which enables a machining speed to be more improved by applying a conducting polymer to a surface of the electrode wire, thus increasing conductivity of the surface of the electrode wire.

Still another object of the present invention is to provide an electrode wire for electrical discharge machining which enables the surface roughness and the machining accuracy to be improved by applying a polymer of semiconductor or insulator to a surface of the electrode wire or forming a semiconducting or insulating oxide layer to uniformly provide irregular discharge current and reduce even the generation of micro cracks or the like at a surface of a machined product.

### [Solution to Problem]

According to the present invention to achieve the objects, there is provided an electrode wire for electrical discharge machining, the electrode wire including: a core made of first metal; and an alloy layer which is formed at an outer circumference of the core due to inter-dispersion of the core and second metal with which an outer surface of the core is plated. The alloy layer includes a portion formed by α phase + β' phase and β' phase grains formed at an outer circumference of the portion formed by the α phase + β' phase. The alloy layer has cracks formed at a surface thereof.

Preferably, at least a part of the outer circumference of the portion formed by the α phase + β' phase has a sunken portion, and the β' phase grains are formed to be embedded in the sunken portion formed at the outer circumference of the portion formed by the α phase + β' phase.

Preferably, the β' phase grains are formed to be embedded in a wedge shape in an outer perimeter of the portion formed by the α phase + β' phase.

Preferably, the β' phase grains are discontinuously formed at an outer perimeter of the portion formed by the α phase + β' phase.

Preferably, the alloy layer further contains β' phase + γ phase grains.

Preferably, the alloy layer further has pinholes formed at the surface thereof.

Preferably, the pinholes have a surface layer formed by at least one of γ phase + ε phase and an ε phase.

Preferably, the alloy layer further has cave-shaped fine voids caved in deeper than the cracks from the surface toward the core.

Preferably, a surface layer of a portion having the cave-shaped fine voids is formed by at least one of the γ phase + ε phase and the ε phase.

Preferably, the β' phase grains have cracks.

Preferably, at least a part of the core penetrates the alloy layer and is exposed to a surface of the electrode wire.

Preferably, at least one of an oxide layer, a conducting polymer, a semiconducting polymer, and an insulating polymer is applied to the surface of the alloy layer.

In addition, preferably, the first metal is made of any one of copper, brass, or metal containing copper, and the second metal is made of any one of zinc, aluminum, tin, or an alloy thereof.

### [Advantageous Effects of Invention]

The present invention can provide an electrode wire for electrical discharge machining which enables machining accuracy and surface roughness to be improved while enabling efficiency of discharge and a machining speed to be also improved by minimizing generation of fine debris of the electrode wire.

The present invention can provide an electrode wire for electrical discharge machining which exhibits a maximum cooling effect and does not generate fine debris, since the electrode wire mainly has β' phase grains, cracks, and pinholes at an outermost layer thereof and a cave-shaped fine voids formed by γ phase + ε phase and ε phase caved in deeper than cracks from a surface toward a core of the electrode wire so as for high-pressure cooling water to infiltrate to the core.

The present invention can provide an electrode wire for electrical discharge machining which has β' phase grains and cracks at the surface of the electrode wire which are more even than γ phase cracks, compared to an electrode wire in the related art which has γ phase grains at a surface of the electrode wire.

The present invention can further improve the machining speed by applying a conducting polymer to the surface of the electrode wire and thus increasing conductivity of the surface of the electrode wire.

The present invention can provide an electrode wire for electrical discharge machining which enables the surface roughness and the machining accuracy to be improved by applying a polymer of semiconductor or insulator to the surface of the electrode wire or forming a semiconducting or insulating oxide layer to uniformly provide irregular discharge current and reduce the generation of micro cracks or the like at a surface of a machined product.

The present invention can obtain an effect of inhibiting re-discharge or the like due to fine debris, since a conducting polymer, a semiconducting polymer, or an insulating polymer is applied to the surface of the electrode wire such that the fine debris can be inhibited from being detached.

### [Brief Description of Drawings]

FIG. 1 is a Cu-Zn binary phase diagram.
FIG. 2 is a comparison graph of hardness and a phase diagram, the hardness being the Brinell hardness of "hyper Zn" containing 50% by weight or more of Zn among Cu-Zn binary alloys and the phase diagram being obtained depending on a change in copper (Cu)-zinc (Zn) binary alloy phase.
FIG. 3 is a view illustrating a cross section of an electrode wire for electrical discharge machining in the related art in which cracks are formed at γ phase grains and a surface alloy layer of the electrode wire.
FIG. 4 is a 3,000-times magnified photograph of a cross section of an electrode wire for electrical discharge machining of the present invention.
FIG. 5 is a magnified photograph of a surface of the electrode wire for electrical discharge machining of the present invention.
FIG. 6 is a 1,000-times magnified photograph of the surface of the electrode wire for electrical discharge machining of the present invention.
FIG. 7 is a 3,000-times magnified photograph of a cross section of the electrode wire for electrical discharge machining of the present invention.
FIG. 8 is a component test diagram of a cave-shaped fine void of the electrode wire for electrical discharge machining of the present invention.
FIG. 9 is a component test diagram of a pinhole of the electrode wire for electrical discharge machining of the present invention.
FIG. 10 is a magnified photograph of a surface of an intermediate wire rod of the electrode wire for electrical discharge machining of the present invention.
FIG. 11 illustrates property values of the conductivity of a conducting polymer.
FIG. 12 illustrates photographs for comparing a corrosion preventive effect on a surface of an iron plate to which a conducting polymer is applied.

### [Best Modes for Carrying out the Invention]

An electrode wire for electrical discharge machining according to a preferred embodiment of the present invention is described in detail with reference to the accompanying drawings.

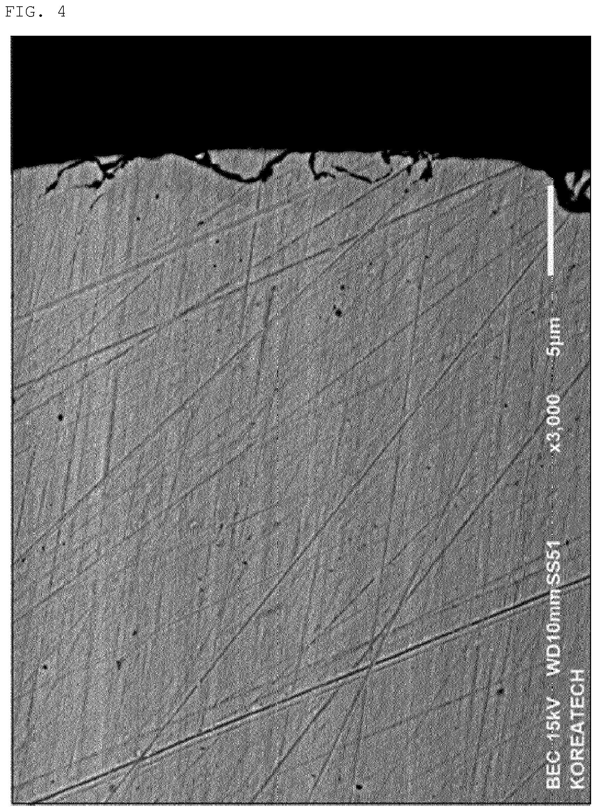

The electrode wire for electrical discharge machining according to the preferred embodiment of the present invention includes a core and an alloy layer as illustrated in a magnified photograph of a cross section in FIG. 4.

The core is a wire rod made of first metal which is positioned at a central portion of the electrode wire, and various types of metal can be used as the first metal which is the material of the wire rod. For example, any one of copper, brass, or metal containing copper can be used, and preferably a brass core or the like containing 65% by weight of copper and 35% by weight of zinc, 63% by weight of copper and 37% by weight of zinc, or 60% by weight of copper and 40% by weight of zinc can be used. Here, the core is covered with the alloy layer to be described below at an outer circumference thereof; however, at least a part of the core can penetrate the alloy layer to be described below, depending on a manufacturing process, to be exposed to the surface of the electrode wire such that components of the core can be detected at the surface of the electrode wire.

The alloy layer is a layer formed at the outer circumference of the core due to inter-dispersion of the core and second metal coated on an outer surface of the core, and the second metal can be made of any one of zinc, aluminum, tin, or an alloy thereof which has a gasification temperature lower than that of the core, and preferably zinc can be used.

The alloy layer has a portion formed by α phase + β' phase illustrated in a Cu-Zn binary phase diagram in FIG. 1 and β' phase grains formed at an outer circumference of the portion formed by the α phase + β' phase, and an outer perimeter of the alloy layer, that is, a portion constituting the surface of the electrode wire has cracks as illustrated in the magnified photograph of the cross section in FIG. 4. The cracks results in an increase in surface area of the alloy layer formed at an outer perimeter of the electrode wire to increase a contact area with cooling water, thus maximizing a cooling effect to contribute to improvement of a machining speed.

The portion formed by the α phase + β' phase is a portion having a composition of a zone illustrated as α + β' in the Cu-Zn binary phase diagram in FIG. 1 and is formed at an outer perimeter of the core to cover the core, and the β' phase grains to be described below are positioned at the outer perimeter of the portion formed by the α phase + β' phase. Here, the portion formed by the α phase + β' phase can be formed to partially penetrate the β' phase grains to be described below so as to reach a surface layer. In this case, the portion formed by the α phase + β' phase partially forms the outermost surface layer of the alloy layer, although taking up a small portion.

The β' phase grains are formed to be embedded in the outer perimeter of the portion formed by the α phase + β' phase so as to have a portion which is sunk in at least a part of the portion formed by the α phase + β' phase as illustrated in the magnified photograph of the cross section in FIG. 4. In addition, the β' phase grains can be formed to be wedged in the outer perimeter of the portion formed by the α phase + β' phase depending on a location, and cracks are formed on or around the β' phase grains.

Here, the β' phase grains can be discontinuously formed at the outer perimeter of the portion formed by the α phase + β' phase or can be formed not to completely cover the outer circumference of the portion formed by the α phase + β' phase. When the β' phase grains are discontinuously formed at the outer perimeter of the portion formed by the α phase + β' phase, a part of the portion formed by the α phase + β' phase is directly exposed to the surface of the alloy layer.

The alloy layer can further have a portion formed by β' phase + γ phase grains illustrated in the Cu-Zn binary phase diagram in FIG. 1. In this case, the surface of the alloy layer can have a mixed state of the β' phase grains, the portion formed by the α phase + β' phase, and the portion formed by β' phase + γ phase grains.

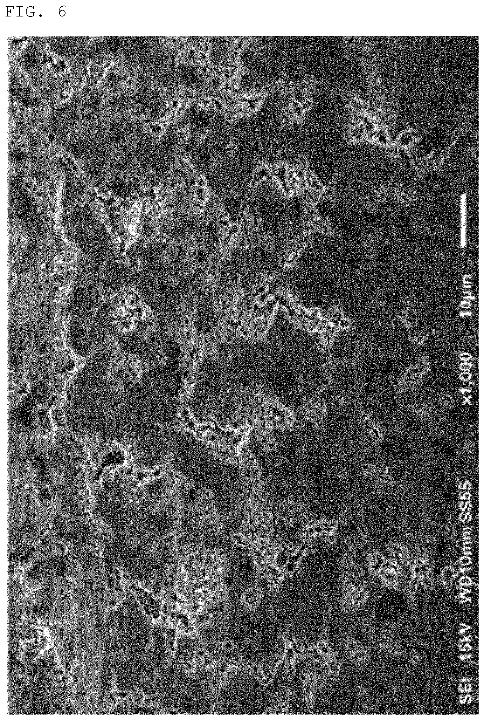

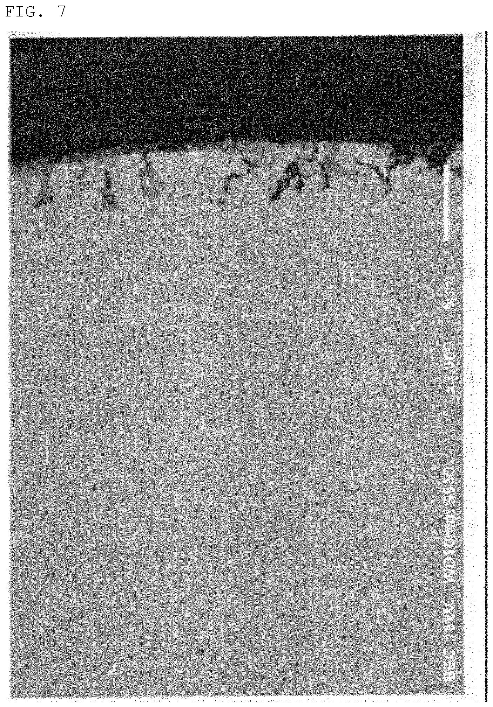

The surface of alloy layer can further have pinholes or cave-shaped fine voids, as well as cracks, as illustrated in a magnified photograph of the surface in FIG. 6 and a magnified photograph of a cross section in FIG. 7.

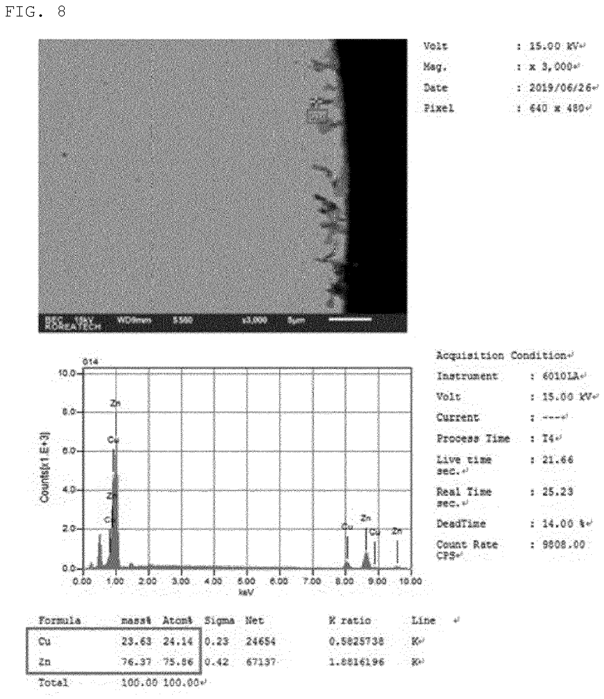

The cave-shaped fine voids can be formed to be caved in deeper than the cracks from the surface toward the core of the electrode wire as illustrated in the magnified photograph of the cross section in FIG. 7. Since a surface layer of a portion in which the cave-shaped fine voids are formed can be partially gasified in manufacturing processes such as a dispersion heat treatment or drawing to be subjected to a dezincification phenomenon, a zinc concentration is increased such that γ phase + ε phase or an ε phase illustrated in FIGS. 1 and 2 can be found, and the γ phase + ε phase and the ε phase can be found to be mixed depending on a location. FIG. 8 illustrates a state where a surface layer of the cave-shaped fine voids has the γ phase + ε phase as 23.6% of Cu and 76.37% of Zn.

The cave-shaped fine voids enable high-pressure cooling water provided during the electrical discharge machining to infiltrate even to a core region (in a case of the cave-shaped fine voids extending to the core region), thus significantly improving a cooling effect. In addition, since a zinc component having the ε phase and the γ phase + ε phase, by which the surface layer of the cave-shaped fine voids is formed, are easily gasified to take away heat, thus further improving the cooling effect to significantly improve a speed of the electrical discharge machining.

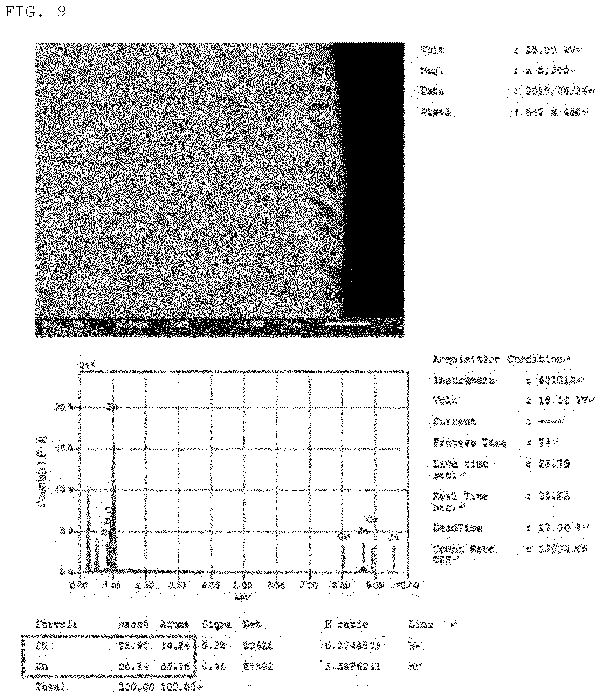

Further, numerous pinholes found at the surface of the alloy layer increase the surface area of the electrode wire, thus improving the cooling effect. In addition, a surface of the pinholes has the γ phase + ε phase and/or the ε phase having a low gasification temperature due to the dezincification phenomenon occurring when the dispersion heat treatment is performed, and thus the cooling effect is further improved during the electrical discharge machining. FIG. 9 illustrates a state where a surface layer of the pinholes formed at the surface of the alloy layer has phases as 13.90% of Cu and 86.10% of Zn.

As described above, all of the cave-shaped fine voids and the pinholes, as well as the cracks, significantly increase the surface area of the electrode wire to fulfill functions of maximizing the cooling effect and improving the machining speed.

As described above, the electrode wire for electrical discharge machining according to the present invention includes the portion formed by α phase + β' phase which is formed around the core and the β' phase grains embedded in the outer perimeter of the portion formed by the α phase + β' phase, and cracks are formed on or around the β' phase grains. In general, when a surface layer of the electrode wire is formed by the γ phase as in the related art, a γ phase alloy layer is a brittle alloy layer by having the hardness of 350HB or higher as illustrated in FIG. 2. Hence, when the brittle alloy layer breaks to generate cracks without withstanding the drawing pressure in a drawing process, fine debris is generated and a large amount of the fine debris is attached to surfaces of the cracks, and the large amount of fine debris attached to the surfaces of the cracks results in re-discharge during the electrical discharge machining, thus becoming an impediment to improvement of the machining speed and the surface roughness.

However, since the β' phase grains of the present invention cause the surface layer of the electrode wire to have a much lower hardness as illustrated in FIG. 2 than the hardness of the γ phase alloy layer in the related art and the surface layer is flexible, the surface layer does not crack in the drawing process, thus allowing little fine debris to be attached to the surface of the electrode wire. Hence, secondary discharge due to the fine debris is reduced during the electrical discharge machining such that the machining speed and the surface roughness are not only significantly improved, but also diamond guide dies through which the electrode wire passes can be inhibited from being clogged or the like.

On the other hand, when a gasification temperature of the γ phase is compared with a gasification temperature of the β' phase, the gasification temperature of the γ phase is lower than the gasification temperature of the β' phase. Hence, among electrode wires in the related art, a machining speed of an electrode wire having the γ phase is generally known to be faster than a machining speed of an electrode wire having the β' phase.

However, even though the surface of the alloy layer of the electrode wire of the present invention is mostly formed by the β' phase grains having a higher copper concentration and a lower zinc concentration than those of the γ phase which is known to be fastest in the related art, little fine debris is attached to the surface of the alloy layer of the present invention, the surface has the β' phase grains and numerous cracks and numerous pinholes formed around the β' phase grains, and cave-shaped fine voids formed by the γ phase + ε phase or the ε phase are formed to extend to a portion deeper than the cracks or the pinholes. Hence, the surface has multiple elements that remarkably improve the cooling effect by causing high-pressure cooling water to infiltrate to the core, and thus the machining speed turns out to be improved to at least 108% or more than the machining speed of the electrode wire having cracks on the γ phase in the related art.

A method for manufacturing an electrode wire for electrical discharge machining according to the preferred embodiment of the present invention having such a structure described above is described as follows.

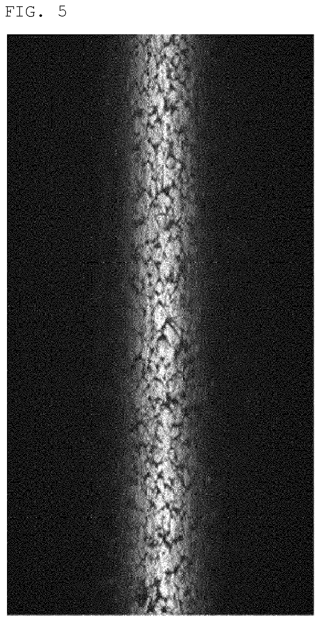

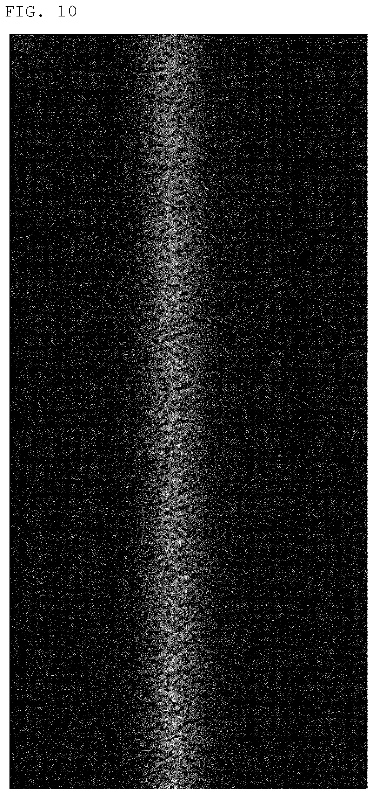

The method for manufacturing an electrode wire for electrical discharge machining according to the present invention is related to a method for manufacturing the electrode wire described above, and a specific embodiment includes a core providing step, a plating step, a primary dispersion heat treatment performing step, a primary drawing step, a secondary dispersion heat treatment performing step, and a secondary drawing step.
(1) In the core providing step, a brass (65%: 35%) wire rod having a rod diameter of 2 mm (first diameter) is provided as a core made of first metal.
(2) In the plating step as a step of obtaining a galvanized wire rod by electroplating zinc having a gasification temperature lower than that of the core with second metal, the core is immersed in an electro-galvanization bath to pass at a predetermined speed while being transported by a roller such that a galvanizing layer (second metal) is formed to have a thickness of 12 µm at an outer perimeter of the core.
(3) In the primary dispersion heat treatment performing step, the galvanized wire rod is subjected to a dispersion heat treatment by passing at a speed of 200 m/min. while being heated to a temperature of about 400°C through a preheat period of an energized heat treatment machine, and an alloy layer is formed at an outer perimeter of an intermediate wire rod.
(4) In the primary drawing step, the intermediate wire rod subjected to the dispersion heat treatment is processed to have a rod diameter of 1.2 mm (second diameter) through the drawing process such that cracks are formed at a surface of the intermediate wire rod. FIG. 10 illustrates cracks formed at the surface of the intermediate wire rod.
(5) In the secondary dispersion heat treatment performing step, the primarily drawn intermediate wire rod is subjected to the dispersion heat treatment by being heated for two hours to raise temperature to 400°C and being heated at 400°C for 20 hours, then the intermediate wire rod is taken out after six hours, and a content ratio of copper (Cu) which is dispersed in a portion of grains which has cracks is increased such that the grains are converted into the β' phase grains.
(6) In the secondary drawing step, the electrode wire for electrical discharge machining is manufactured in automated equipment in which a secondary drawing step and a stabilization heat treatment can be simultaneously performed such that the intermediate wire rod subjected to the secondary dispersion heat treatment has a wire diameter of 0.25 mm which is a standard size of the electrode wire. FIG. 5 is a magnified photograph of the surface of the finally manufactured electrode wire according to the present invention, and the photograph clearly shows the β' phase grains and crack portions. When the grains in the crack portions illustrated in FIG. 5 are compared with grains in the crack portions of an intermediate wire rod illustrated in FIG. 10, an area of a grain is observed to be increased, so generation of the fine debris can be observed to be remarkably reduced at the crack portion in FIG. 5 due to the increase in area of the grain compared to the crack portion in FIG. 10. In addition, FIG. 4 is a magnified photograph of a cross section of the electrode wire manufactured by the above-described method, and the photograph clearly shows grains embedded in sunken portions of the alloy layer. FIG. 6 is a magnified photograph of a surface of the electrode wire, and cracks, pinholes, and cave-shaped fine voids can be observed at the surface layer. FIG. 7 is a magnified photograph of a cross section of the electrode wire, and cracks and cave-shaped fine voids can be observed.

The manufacturing method can be performed by variously selecting and modifying a dispersion heat treatment method, a temperature and a time of the dispersion heat treatment, a process of a plating method or the like in various manners suitable for equipment possessed by a company within a range not departing from a basic concept of the present invention.

Table 1 to be provided below shows machining test results of machined products obtained by using the electrode wire having a wire diameter of φ0.25 mm according to the present invention manufactured as described above and electrode wires according to Comparative Examples 1 and 2.

**[Table 1]**

| | Present Invention | | Comparative Example 1 | | Comparative Example 2 | |
|---|---|---|---|---|---|---|
| 1st Cut | 787 sec | 108% | 848 sec | 100% | 835 sec | 102% |
| 2nd Cut | 177 sec | 114% | 201 sec | 100% | 202 sec | 100% |
| Total | 964 sec | 109% | 1,049 sec | 100% | 1,037 sec | 101% |

* The machining test example shown in Table 1 was processed by Charmilles Robofil 240SL in accordance with ST25A. Tec. A machined product is SKD-11 (1.5C-12Cr-1Mo-0.35V) alloy tool steel, and the machined product having the Rockwell hardness of 58 to 65, a height of 40 mm thickness is cut into a quadrangular bar shape having a size of width × length = 10 mm × 10 mm.

* Comparative Example 1 is Thermo JP2 manufactured by THERMOCOMPACT in France and is an electrode wire having a wire diameter of φ0.25 mm which has cracks at a surface of a γ phase alloy layer thereof, and Comparative Example 2 is Topas PLUS H manufactured by Berkenhoff H in Germany and is an electrode wire having a wire diameter of φ0.25 mm which has cracks at a surface of a γ phase alloy layer thereof.

As shown in the test results, when the electrical discharge machining is performed on the electrode wire of the present invention and the electrode wires of Comparative Examples 1 and 2 till secondary machining in the standard parameter conditions generally used in a production site, it can be observed that, compared to Comparative Example 1, the electrode wire of the present invention improves the machining speed to at least 108% or higher in the primary machining and to a maximum of 114% in the secondary machining.

On the other hand, the alloy layer of the electrode wire is described to contain the portion formed by the α phase + β' phase and the β' phase grains formed at the outer circumference of the portion formed by the α phase + β' phase in the example described above; however, the surface of the alloy layer can be manufactured to have the β' phase grains at most thereof and a mixed state of the γ phase grains or the γ phase + ε phase grains at some parts thereof by changing some of dispersion heat treatment conditions, the drawing process, and the like.

Most of the surface of the alloy layer of the electrode wire manufactured as described above is formed by the β' phase grains, and some parts thereof include both the portion formed by the α phase + β' phase and a portion formed by the γ phase grains or the γ phase + ε phase grains.

On the other hand, the electrode wire according to the present invention can have an oxide layer on the surface layer of the portion which is exposed to the surface of the electrode wire and portions which form cracks, pinholes, and cave-shaped fine voids of the portion formed by the β' phase grains and the α phase + β' phase. In this case, when the oxide layer is formed on the surface of the electrode wire and the cave-shaped fine voids, the oxide layer increases absorption of the cooling water and conductance to improve discharge power, and thus the machining speed can be further improved.

In addition, the electrode wire according to the present invention can increase the conductance of the surface of the electrode wire by applying a conducting polymer to the surface of the electrode wire and can improve the machining speed by inhibiting the generation of fine debris.

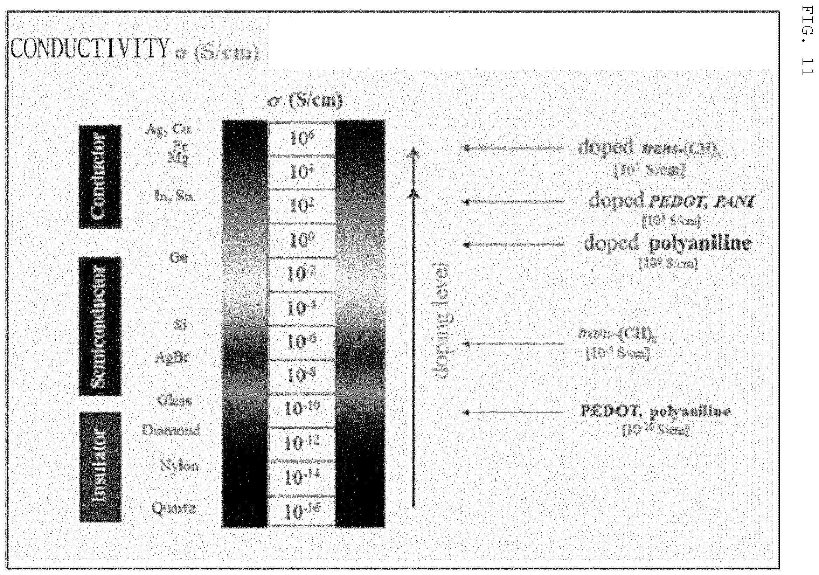

The conducting polymer has very good conductivity of 100 s/cm or higher as illustrated in property values of the conductivity of FIG. 11, and examples thereof can include doped PEDOT, doped polyaniline, and the like. FIG. 12 illustrates an example of corrosion preventive experiment of metal by using doped polyaniline, (A) of FIG. 12 illustrates a surface state of an iron plate, and (B) of FIG. 12 illustrates a photograph taken after a chlorine spray test for testing corrosion resistance by spraying a 0.5 M NaCl solution to promote corrosion, after polyaniline is applied to a surface of the iron plate illustrated in (A) of FIG. 9. The photograph in (B) of FIG. 12 can clearly show that a portion coated with polyaniline is not corroded at all and an uncoated portion is considerably corroded.

In addition, a semiconducting polymer or an insulating polymer can be applied to the surface of the alloy layer of the electrode wire according to the present invention. The semiconducting polymer and the insulating polymer stabilize an amplitude of the discharge current to a normal state, thus stabilizing a discharge pulse height, a pulse width, a rise time, a fall time, or the like such that the surface roughness and the machining accuracy of the machined product are further improved.

In addition, at least one of an oxide layer, a conducting polymer, a semiconducting polymer, and an insulating polymer can be applied to the surface of the alloy layer; however, one or more thereof can be applied to the surface.

A configuration of a technology of the electrode wire for electrical discharge machining of the present invention described above is not limited to the contents of the detailed description of the invention and can be variously modified within a range without departing from the technical idea and objects of the present invention.

### [Industrial Applicability]

The present invention is applicable to an electrode wire for electrical discharge machining which minimizes the generation of fine debris during the electrical discharge machining, and thus re-discharge does not occur such that a machining speed is improved and the surface roughness of a workpiece is significantly improved.

## Claims

1. An electrode wire for electrical discharge machining, comprising:
a core made of first metal; and
an alloy layer which is formed at an outer circumference of the core due to inter-dispersion of the core and second metal with which an outer surface of the core is plated,
wherein the alloy layer includes
a portion formed by α phase + β' phase and
β' phase grains formed at an outer circumference of the portion formed by the α phase + β' phase, and
wherein the alloy layer has cracks formed at a surface thereof.

2. The electrode wire for electrical discharge machining according to claim 1,
wherein at least a part of the outer circumference of the portion formed by α phase + β' phase has a sunken portion, and
wherein the β' phase grains are formed to be embedded in the sunken portion formed at the outer circumference of the portion formed by the α phase + β' phase.

3. The electrode wire for electrical discharge machining according to claim 1,
wherein the β' phase grains are formed to be embedded in a wedge shape in an outer perimeter of the portion formed by the α phase + β' phase.

4. The electrode wire for electrical discharge machining according to claim 1,
wherein the β' phase grains are discontinuously formed at an outer perimeter of the portion formed by the α phase + β' phase.

5. The electrode wire for electrical discharge machining according to claim 1,
wherein the alloy layer further contains β' phase + γ phase grains.

6. The electrode wire for electrical discharge machining according to claim 1,
wherein the alloy layer further has pinholes formed at the surface thereof.

7. The electrode wire for electrical discharge machining according to claim 6,
wherein the pinholes have a surface layer formed by at least one of γ phase + ε phase and an ε phase.

8. The electrode wire for electrical discharge machining according to any one of claims 1 to 7,
wherein the alloy layer further has cave-shaped fine voids caved in deeper than the cracks from the surface toward the core.

9. The electrode wire for electrical discharge machining according to claim 8,
wherein a surface layer of a portion having the cave-shaped fine voids is formed by at least one of the γ phase + ε phase and the ε phase.

10. The electrode wire for electrical discharge machining according to any one of claims 1 to 7,
wherein the β' phase grains have cracks.

11. The electrode wire for electrical discharge machining according to any one of claims 1 to 7,
wherein at least a part of the core penetrates the alloy layer and is exposed to a surface of the electrode wire.

12. The electrode wire for electrical discharge machining according to claim 1,
wherein at least one of an oxide layer, a conducting polymer, a semiconducting polymer, and an insulating polymer is applied to the surface of the alloy layer.

13. The electrode wire for electrical discharge machining according to any one of claims 1 to 7,
wherein the first metal is made of any one of copper, brass, or metal containing copper, and the second metal is made of any one of zinc, aluminum, tin, or an alloy thereof.
